# FASCICULE DE BREVET EUROPEEN

(11) **EP 2 021 108 B1**
(45) Date de publication et mention de la délivrance du brevet: **24.10.2012**
(21) Numéro de dépôt: 07766075.1
(22) Date de dépôt: 18.05.2007
(51) Int. Cl.: B01D 65/02, B01D 61/20, B01D 61/22, C12G 1/02, C12G 1/00, F04B 53/00, C12H 1/16

(54) **PROCEDE POUR DECOLMATER LA MEMBRANE D'UN DISPOSITIF DE FILTRATION TANGENTIELLE DU VIN**
VERFAHREN ZUR REINIGUNG DER MEMBRAN EINER VORRICHTUNG ZUR QUERSTROMFILTERATION VON WEIN
METHOD FOR DECLOGGING THE MEMBRANE OF A DEVICE FOR THE CROSS-FLOW FILTRATION OF WINE

(30) Priorité: 18.05.2006 FR 0651819
(43) Date de publication de la demande: 11.02.2009
(73) Titulaire: Pourtaud, Nicolas, 30000 Nimes (FR); Zlatoff, Jérôme, 34080 Montpellier (FR)
(72) Inventeur: Pourtaud, Nicolas, 30000 Nimes (FR); Zlatoff, Jérôme, 34080 Montpellier (FR)
(74) Mandataire: Rhein, Alain
(86) Numéro de dépôt international: PCT/FR2007/051301
(87) Numéro de publication internationale: WO 2007/135333

(56) Documents cités:
- EP-A- 1 306 118
- WO-A-2005/082499
- DE-A1- 3 727 277
- DE-A1- 4 204 708
- DE-A1- 10 044 713

## Description

L'invention concerne un procédé pour décolmater la membrane d'un dispositif de filtration tangentielle d'un fluide, notamment du vin.

L'invention concerne le domaine de la fabrication des installations pour le traitement d'un fluide, plus particulièrement pour la filtration d'un fluide contenant des particules en suspension responsables du trouble de ce fluide. Cette invention trouvera une application particulièrement appropriée lorsqu'il s'agit de filtrer du vin, voire encore des fluides issus du raisin, notamment des moûts de raisin.

Une telle installation comporte, d'une part, une cuve contenant le fluide à filtrer et, d'autre part, un dispositif de filtration alimenté en fluide par ladite cuve sous l'impulsion d'une pompe d'alimentation implantée au niveau d'un conduit d'alimentation raccordant ladite cuve au dispositif de filtration. Ce dispositif de filtration comporte une boucle de circulation du fluide à filtrer, alimentée par le conduit d'alimentation et sur laquelle sont implantés, d'une part, une pompe assurant la circulation du fluide dans la boucle et, d'autre part, un moyen de filtration de ce fluide. Un tel moyen de filtration se présente, usuellement, sous la forme d'un carter recevant, intérieurement, au moins une membrane (voire, et de préférence, une pluralité de membranes) à l'intérieur de laquelle circule le fluide à filtrer. C'est, plus particulièrement, une telle membrane qui assure une filtration par écoulement tangentiel d'une partie du fluide au travers de la paroi de cette membrane. Le fluide filtré par une telle membrane, usuellement dénommé perméat, s'écoule hors du carter par le biais d'un conduit d'évacuation acheminant ce perméat en direction d'une cuve de stockage du fluide filtré.

On observera que la membrane de filtration est propre en début de filtration et présente une résistance à l'écoulement transmembranaire faible et, par conséquent, un flux de perméation fort. Au fur et à mesure de l'écoulement du fluide à l'intérieur et au travers de la membrane, il se forme une couche de particules (appelée couche de polarisation) au niveau de la surface interne de cette membrane. Cette couche de particules a tendance à s'épaissir au cours du temps et induit une résistance croissante à l'écoulement transmembranaire provoquant une diminution significative de la perméabilité de la membrane et, par conséquent, une diminution importante du flux de perméation.

Afin de remédier à cet inconvénient, il est connu de disposer, en série sur le conduit d'évacuation, une vanne à manchon constituée par un tube en acier inoxydable contenant un manchon en matériau souple accolé contre le tube. Cette vanne est conçue pour être alimentée en air comprimé injecté à l'intérieur du tube et dans l'interstice entre ce tube et le manchon. Sous l'effet d'une telle injection d'air, le manchon est repoussé au centre du tube ayant pour effet de diminuer le volume du tube et d'expulser du perméat hors de cette vanne. Une telle expulsion a pour effet de refouler du perméat en direction du dispositif de filtration, plus particulièrement en direction de la ou des membranes de filtration. Un tel refoulement est censé permettre une dissociation de la couche de particules et, par conséquent, un décolmatage de la ou des membranes.

On observera que l'utilisation d'une telle vanne à manchon présente un certain nombre d'inconvénients.

En effet, l'air comprimé est injecté dans la vanne à manchon avec une certaine pression qui peut aller jusqu'à 6 bars et qui n'est pas contrôlable. Il en résulte que le perméat peut, alors, être injecté dans le dispositif de filtration à une pression de 6 bars alors que les membranes (notamment les membranes de type organique) sont conçues pour résister à une pression maximale de 2 bars.

De manière à ne pas endommager les membranes, le conduit véhiculant l'air comprimé est de petite taille ce qui permet de diminuer la pression d'injection du perméat mais augmente de manière notable le temps d'injection de l'air comprimé qui est de l'ordre de 5 secondes. Une telle durée d'injection a pour effet de diminuer le débit du perméat censé traverser la membrane lors d'une opération de rétrofiltration.

Au final, l'utilisation d'une telle vanne à manchon s'avère bien peu efficace, voire totalement inefficace, et ne permet pas de décolmater, de manière appropriée, la membrane d'un dispositif de filtration.

Dans le document WO2005/082499 il est divulgué un appareil et un procédé de micro ou d'ultrafiltration.

Cet appareil comporte un filtre constitué par une membrane disposée dans un logement ayant un côté rétentat et un côté perméat. Ce côté perméat est raccordé à un circuit de circulation du perméat comportant, d'une part et en amont du filtre, une pompe conçue pour assurer la circulation du perméat dans le circuit et apte à injecter en continu du perméat dans ce filtre et, d'autre part et en aval du filtre, une vanne de coupure.

Le procédé décrit dans ce document consiste, alors, à injecter du perméat à l'intérieur du filtre par le biais de la pompe tout en maintenant la vanne de coupure fermée. Ceci permet d'augmenter graduellement la pression du côté perméat à un niveau supérieur à celle du côté rétentat en sorte qu'il se produit une rétrofiltration. De manière périodique, la vanne de coupure est ouverte autorisant l'évacuation du perméat sous pression hors de ce filtre et, ainsi, la poursuite de la filtration normale.

Dans le document DE 37 27 277 il est décrit un procédé et un dispositif pour filtrer un fluide.

Ce dispositif comporte, d'une part, un filtre constitué par une pluralité de membranes disposées dans un logement et, d'autre part, un appareil à pression hydraulique (pompe à piston), raccordé à ce logement, et conçu pour refouler du perméat (filtrat) au temps de ces membranes.

En ce qui concerne le procédé, celui-ci consiste :
- à filtrer un moût de soja circulant au travers de ce filtre avec une vitesse de 3m/s ;
- à refouler, au travers de ce même filtre, le perméat avec une vitesse de 8,2.105 m3/m2/s (environ 295 1/h/m²), ceci sous une pression de 3 kg/cm2 (environ 3 bars) exercée par l'appareil à pression hydraulique sur le perméat. La durée de refoulement est, de préférence, comprise entre 1 et 2s.

La présente invention se veut à même de remédier aux inconvénients des dispositifs de l'état de la technique.

A cet effet, l'invention concerne un procédé pour décolmater la membrane d'un dispositif de filtration tangentielle d'un vin, colmatée par une couche de particules, ce procédé consistant à refouler au travers de la membrane une quantité déterminée de perméat obtenu par la filtration de ce vin. Ce procédé, conformément à la revendication 1, est caractérisé par le fait qu'il consiste à refouler le perméat au travers de la membrane :
- avec un débit de refoulement (Dr) du perméat, d'une part, supérieur à 500 1/h/m² et, d'autre part, inférieur à la perméabilité initiale de la membrane sur eau ;
- pendant une durée de refoulement (Tr) du perméat comprise entre 0,1 et 1,5s ;
- sous une pression de refoulement comprise entre 1 et 2 bars ;
- ceci de manière à provoquer, au niveau de cette membrane, un choc, similaire à un coup de bélier, apte à provoquer le décollement des particules de cette membrane.

La durée du refoulement du perméat correspond, sensiblement, à la durée de transit du fluide à l'intérieur de la membrane. Cette durée de refoulement du perméat est au moins égale à la durée de transit du fluide à l'intérieur de la membrane.

Le débit de refoulement du perméat est supérieur au débit de filtration du fluide par la membrane, voire au moins égal au double de ce débit, notamment dans le cadre d'un procédé de décolmatage mené à titre préventif, ceci lorsque la membrane est peu ou pas colmatée. Ce débit de refoulement peut, également, être de l'ordre de 7 à 30 fois le débit de filtration, ceci dans le cadre d'un procédé de décolmatage mené à titre curatif, lorsque la membrane est colmatée.

Le procédé selon l'invention concerne, en fait, une rétrofiltration du fluide filtré par un dispositif de filtration et consistant à refouler le perméat au travers de la membrane de filtration de ce dispositif. En fait, l'invention se caractérise en ce que cette rétrofiltration est assurée avec un débit élevé et sur une courte durée. Une telle manière de procéder permet, avantageusement, de conférer au perméat refoulé une puissance importante ayant pour effet de provoquer, au niveau d'une membrane, un choc similaire à un coup de bélier apte à provoquer le décollement des particules de cette membrane et, par conséquent, son décolmatage.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est un schéma d'une installation pour le traitement d'un fluide, notamment du vin ;
- la figure 2 est une vue schématisée et en détail du dispositif de décolmatage.

La présente invention concerne le domaine de l'operation des installations conçues pour assurer le traitement d'un fluide et trouvera une application particulièrement appropriée dans le cadre du traitement du vin, voire de tout fluide issu du raisin, notamment des moûts de raisin.

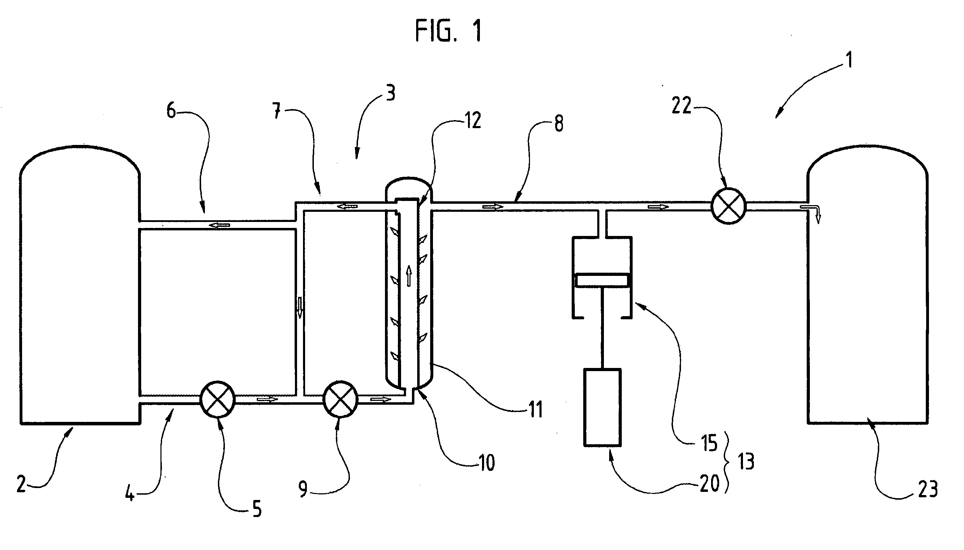

Tel que visible sur la figure 1, une telle installation 1 comporte, d'une part, un réservoir 2 contenant le fluide à traiter. En fait et dans le cadre de la présente invention, un tel réservoir 2 est, plus particulièrement, constitué par une cuve à vin contenant un certain nombre de particules, notamment en suspension, conférant à ce vin une certaine turbidité qu'il convient d'éliminer.

Cette installation 1 comporte, encore, un dispositif de filtration 3 conçu pour réduire, voire éliminer, la turbidité de ce fluide. Ce dispositif de filtration 3 est alimenté en fluide par ledit réservoir 2 raccordé à ce dispositif de filtration 3 par l'intermédiaire d'un conduit d'alimentation 4 à l'intérieur duquel circule ce fluide sous l'impulsion d'une pompe d'alimentation 5 implantée au niveau de ce conduit d'alimentation 4.

Tel que visible sur la figure 1, le dispositif de filtration 3 peut, encore, être raccordé audit réservoir 2 par l'intermédiaire d'un conduit de retour 6 à l'intérieur duquel circule du fluide en provenance de ce dispositif de filtration 3 et en vue de son réacheminement vers le réservoir 2, ceci de manière à équilibrer le volume de fluide entrant dans le dispositif de filtration 3 et le volume de fluide en sortant.

En ce qui concerne ledit dispositif de filtration 3, celui-ci comporte une boucle 7 de circulation du fluide à filtrer, cette boucle 7 étant, d'une part, raccordée au conduit d'alimentation 4 pour l'introduction du fluide à filtrer dans cette boucle 7 et, d'autre part, raccordée à un conduit de sortie 8 pour l'évacuation du fluide filtré (perméat) par le dispositif de filtration 3. Cette boucle 7 peut, encore, être raccordée au conduit de retour 6 pour l'évacuation d'une partie du fluide non filtré (rétentat) contenu et circulant dans cette boucle 7.

Ce dispositif de filtration 3 comporte, encore, d'une part, une pompe 9 conçue pour assurer la circulation du fluide à filtrer (rétentat) au sein de la boucle 7 et, d'autre part, un moyen 10 de filtration de ce fluide plus particulièrement conçu pour assurer une filtration tangentielle de ce fluide.

Ce moyen de filtration 10 se présente sous la forme d'un carter 11 recevant, intérieurement, au moins une membrane 12 à l'intérieur de laquelle circule le fluide à filtrer (rétentat) propulsé par la pompe de circulation 9 à une vitesse V comprise entre 1 et 5m/s.

Une telle membrane 12 peut être, soit de type organique et être constituée par un capillaire creux (environ 1 m de long et 1,5 à 2mm de diamètre), soit de type minéral et être constituée par une fibre creuse (environ 1m de long et 10 à 25mm de diamètre) composée d'une pluralité de canaux.

Ainsi et compte tenu de la longueur L d'une telle membrane 12 (usuellement 1m) et de la vitesse V de circulation du fluide dans la boucle 7, ce fluide (plus particulièrement les particules y contenues) met une durée déterminée Tt pour transiter à l'intérieur de cette membrane 12, cette durée Tt étant, alors, compris entre 0,2 et 1s.

En fait, cette membrane 12 présente une paroi au travers de laquelle le fluide (rétentat) est filtré pour l'obtention d'un fluide filtré et clarifié (perméat) s'écoulant dans le carter 11 et évacué hors de ce carter 11 par le conduit de sortie 8 raccordé à ce dernier 11.

A ce propos, on observera que la paroi de cette membrane 12, au travers de laquelle le fluide est filtré, présente une perméabilité de l'ordre de 4000 à 4300 1/h/m2/bar.

En fait, à l'intérieur d'une telle membrane 12, le flux du liquide à filtrer (rétentat) est tangentiel à la paroi interne de la membrane 12 de sorte qu'il apparaît un gradient de vitesse à l'intérieur de la membrane 12 qui est nul au niveau de la paroi interne de cette membrane 12. A la surface de cette paroi interne, il apparaît une couche limite à l'intérieur de laquelle, d'une part, l'écoulement du fluide est laminaire et, d'autre part, apparaît un équilibre entre les différentes forces s'appliquant sur les particules responsables du trouble du fluide. Il en résulte la formation, au niveau de la surface de la paroi interne de la membrane 12, d'une couche de particules appelée couche de polarisation qui induit une résistance à l'écoulement transmembranaire du liquide à filtrer. La présence de cette couche provoque le colmatage de la membrane 12 et réduit de manière significative la perméabilité de cette membrane 12 ce qui ralentit considérablement le débit de filtration du fluide.

Afin de remédier à ce phénomène, l'installation 1 comporte, encore, un dispositif 13 conçu pour assurer le décolmatage de la membrane 12 du dispositif 3 de filtration tangentielle susmentionné.

Un tel dispositif 13 de décolmatage comporte des moyens 14 pour refouler une quantité déterminée de perméat (fluide filtré) en direction de membrane 12, ceci avec un débit élevé et sur une courte durée.

De telles conditions de refoulement (débit élevé et courte durée) sont déterminées en sorte de provoquer un choc, similaire à un coup de bélier, et apte à provoquer le décollement (désincrustation) des particules de la membrane 12 du moyen de filtration 10.

Ces conditions de refoulement peuvent, en fait et comme il sera détaillé dans la suite de la description, être satisfaites en fournissant une petite quantité d'énergie sur un temps très court, donc en mettant en oeuvre des puissances élevées.

A ce propos, il convient d'observer que la membrane 12 du moyen de filtration 10 est conçue pour fonctionner sous une pression de fluide maximale déterminée, ceci sans subir de dégradations. Aussi et afin d'éviter toute dégradation de cette membrane 12 due à une puissance trop élevée, l'invention consiste, notamment, à assurer le refoulement du perméat sous une pression inférieure à cette pression maximale, plus particulièrement sous une pression inférieure à 2 bars, de préférence inférieure à 1.5 bars.

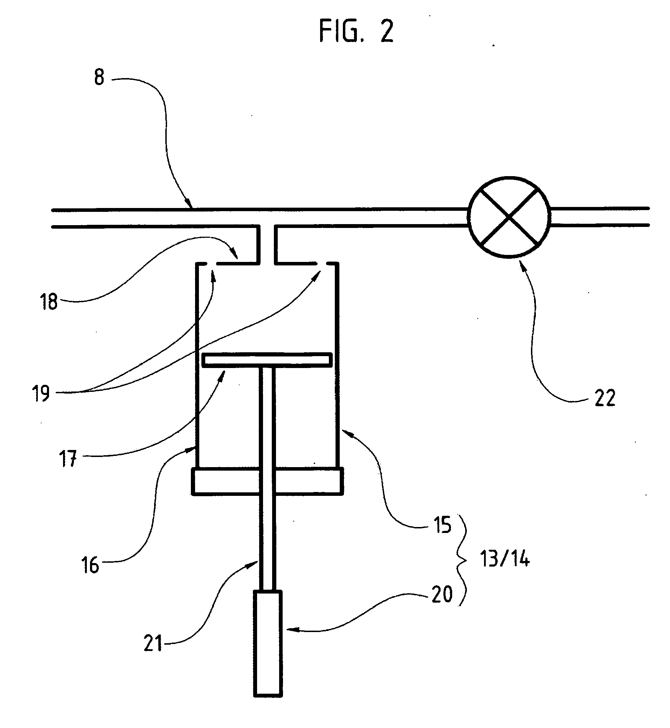

Pour assurer un tel refoulement et tel que visible sur la figure 2, les moyens de refoulement 14 que comporte le dispositif 13 de décolmatage sont définis, d'une part, par une pompe à piston 15 conçue pour contenir du perméat et définie par un cylindre 16 à l'intérieur duquel est monté un piston mobile 17.

Cette pompe à piston 15 comporte une culasse 18 surmontant le cylindre 16 et dépourvue de soupape mais percée d'au moins un orifice 19, voire (et de préférence) de trois orifices (un central et deux périphériques), destinés à permettre une purge de cette pompe 15. La présence de ce ou ces orifices 19 permet, avantageusement, d'assurer l'évacuation d'une éventuelle bulle d'air susceptible de nuire à l'efficacité de la pompe 15, ceci en raison de la forte compressibilité d'une telle bulle d'air, plus particulièrement en comparaison avec la quasi incompressibilité du perméat.

D'autre part, lesdits moyens de refoulement 14 sont définis par un vérin 20 pour l'actionnement du piston 17 de cette pompe à piston 15, ce vérin 20 étant raccordé à ce piston 17 par le biais d'une bielle 21 comme visible figure 2.

Selon un premier mode de réalisation, un tel vérin 20 peut être de type pneumatique, notamment à air comprimé.

A ce propos, il convient d'observer que la pression de l'air comprimé servant de fluide effecteur est limitée, notamment à 6 bars. Ceci étant, pour refouler du perméat avec un débit élevé et sur une courte durée, il est alors nécessaire de conférer à cet air comprimé un débit particulièrement élevé (entre 50 et 80 1/min) induisant une vitesse de circulation d'air dans les canalisations particulièrement importante (entre 20 et 50 m/s) ce qui, d'une part, est difficilement réalisable de manière industrielle et, d'autre part, se traduit par une perte de charge importante pouvant aller jusqu'à 50% en fonction de la longueur de la canalisation.

Afin de remédier à un tel inconvénient et selon un mode de réalisation préféré de l'invention, ledit vérin 20 est de type hydraulique, notamment à huile.

En fait, un tel vérin hydraulique 20 comporte, lui aussi, un piston mobile (non représenté) associé à ladite bielle 21 ainsi qu'un cylindre à l'intérieur duquel est monté ce piston mobile et destiné à recevoir un fluide hydraulique effecteur apte à mouvoir ce piston mobile.

A ce propos, on observera que les moyens de refoulement 14 sont conçus en sorte que le compartiment de la pompe à piston 15 susceptible de contenir le perméat et le compartiment du vérin hydraulique 20 susceptible de contenir du fluide hydraulique effecteur ne puissent aucunement communiquer. Les moyens de refoulement 14 sont, alors, dépourvus d'un quelconque moyen susceptible d'assurer une communication entre ces deux compartiments.

Un tel mode de réalisation permet, avantageusement, d'éviter toute pénétration de fluide hydraulique effecteur dans le cylindre 16 de la pompe à piston 15 contenant du perméat, ceci pour des raisons évidentes d'hygiène.

Pour ce faire, le cylindre 16 de cette pompe à piston 15 et le cylindre du vérin hydraulique 20 sont, de préférence, distincts l'un de l'autre.

Il convient d'observer que le piston mobile de ce vérin hydraulique 20 est mis en mouvement sous l'impulsion d'un fluide hydraulique effecteur (usuellement de l'huile) dont la pression, au sein de l'installation 1, peut être de 150 bars, voire de 200 bars, ceci pour des surfaces de filtration de l'ordre de 24 m².

A ce propos et tel qu'évoqué ci-dessus, il convient de rappeler que la membrane 12 est conçue pour fonctionner, sans subir de dégradations, sous une pression maximale déterminée et que l'invention consiste, en fait, à refouler du perméat sous une pression inférieure ou égale à 2 bars, plus particulièrement inférieure à 1.5 bars.

Pour ce faire, une solution conforme à l'invention consiste à dimensionner en conséquence le vérin hydraulique 20 et la pompe à piston 15, plus particulièrement la surface S1 du piston du vérin hydraulique 20 et la surface S2 du piston 17 de la pompe à piston 15.

A ce propos, on observera que de bons résultats sont obtenus pour un rapport entre les surfaces (S1, S2) des pistons inférieur à 133, de préférence compris entre 75 et 133, notamment de l'ordre de 100.

Ceci étant et pour refouler du perméat avec un débit élevé et sur une courte durée, il est alors possible de conférer au fluide effecteur un débit de l'ordre de 2 à 3,5 1/min, correspondant à une vitesse du fluide effecteur de l'ordre de 1 à 2 m/s.

A titre d'exemple et dans le cadre d'une installation 1 dont la surface de filtration est de l'ordre de 100 m², le vérin hydraulique 20 est mis en mouvement sous l'impulsion d'un fluide effecteur dont la pression peut être de 100 bars et dont le débit est de l'ordre de 60 à 80 1/min, correspondant à une vitesse du fluide effecteur de l'ordre de 3,6 à 5 m/s.

Un autre mode de réalisation préféré de l'invention consiste en ce que ledit vérin 20 est de type électrique.

Dans un pareil cas, les paramètres à prendre en compte sont la course du vérin ainsi que la durée de refoulement du perméat.

A titre d'exemple de réalisation, il est possible de faire appel à un vérin électrique dont la puissance est comprise entre 200 et 2000Watts et/ou permettant de générer des forces de l'ordre de 1 à 6kN.

En fait et pour respecter la pression maximale admissible par la membrane 12, il est nécessaire de limiter la puissance du moteur électrique d'un tel vérin 20.

Pour ce faire, un tel vérin électrique 20 est complété par un variateur de fréquence combiné avec un limiteur de couple et dont les valeurs de consigne sont déterminées en fonction du débit et de la durée de refoulement du perméat.

En fait, un tel dispositif de décolmatage 13 est raccordé en parallèle sur le conduit de sortie 8.

Selon une autre caractéristique, l'installation 1 comporte une vanne 22 implantée au niveau du conduit de sortie 8 et en aval du dispositif de décolmatage 13. Cette vanne 22 permet de couper la circulation du perméat dans ce conduit 8 lors d'un procédé de rétrofiltration ainsi que de réguler le flux de perméat lors de la filtration elle même, ceci notamment sous la dépendance d'un automate intégrant les données des différents capteurs équipant le dispositif de filtration 3.

Finalement, cette installation 1 comporte une cuve de stockage 23 du perméat raccordée audit conduit de sortie 8.

En fait, une telle installation 1 et, plus particulièrement, le dispositif 13 de décolmatage que comporte cette installation 1, permettent de mettre en oeuvre un procédé de décolmatage faisant l'objet de la présente invention.

Un tel procédé consiste à décolmater la membrane 12 d'un dispositif 3 de filtration tangentielle d'un fluide, notamment du vin, colmatée par une couche de particules, ceci à l'aide du perméat obtenu par filtration de ce fluide à l'aide dudit dispositif de filtration 3.

En fait, ce procédé consiste à refouler une quantité déterminée de perméat (plus particulièrement une partie au moins - voire l'intégralité - de la quantité de perméat contenue dans la pompe à piston 15 des moyens de refoulement 14) au travers de la membrane 12 avec un débit Dr élevé et sur une courte durée Tr.

Ce procédé consiste, alors, à introduire de manière violente du perméat dans le carter 11 du dispositif de filtration 3. Une telle introduction provoque, au niveau de la membrane 12, un choc similaire à un coup de bélier ou analogue.

Ce choc a pour effet de provoquer le décollement des particules de cette membrane 12 et la désincrustation de ces particules de la paroi interne de cette membrane 12.

En fait, on observera que ce procédé va à l'encontre des procédés de décolmatage de l'état de la technique qui consistent à refouler du perméat pendant une durée importante et avec un faible débit, notamment à l'aide d'une vanne à manchon.

Selon une autre caractéristique de l'invention, la durée du refoulement Tr du perméat correspond, sensiblement, à la durée de transit Tt du fluide à l'intérieur de la membrane 12.

A ce propos, on observera que la durée de refoulement Tr peut être inférieure à la durée de transit Tt du fluide. Un tel mode de réalisation peut, éventuellement et notamment dans le cadre de membranes 12 fortement colmatées, occasionner un redépôt des particules sur une telle membrane 12 avant même que ces particules n'aient le temps d'être évacuées hors de cette membrane 12.

Afin de remédier à un tel inconvénient et selon un mode de réalisation préféré, cette durée de refoulement Tr du perméat est, de préférence, au moins égale à cette durée de transit Tt du fluide à l'intérieur de cette membrane 12, ceci pendant la durée de l'opération de refoulement.

Tel qu'évoqué ci-dessus, compte tenu de la vitesse de circulation du rétentat dans la boucle 7, la durée de transit Tt est de l'ordre de 0,1 à 1s de sorte que ladite durée de refoulement Tr comprise entre 0,1 et 1,5s.

En fait est selon un mode de réalisation préféré de l'invention, cette durée de refoulement Tr est, de préférence, de l'ordre de 0,8 s.

A ce propos, il convient d'observer qu'une durée de refoulement Tr trop importante par rapport à la durée de transit Tt revient à réinjecter une quantité importante de perméat dans la boucle 7, quantité que le dispositif de filtration 3 doit à nouveau filtrer ce qui nuit à la rentabilité de l'installation 1.

Selon une autre caractéristique de l'invention, le débit de refoulement Dr du perméat est élevé.

A ce propos, on observera que le fluide est filtré au travers de la membrane 12 avec un débit de filtration Df de l'ordre de 70 1/h/m² (litres par heure et par m² de surface de filtration), soit 0,47 1/s pour une surface de filtration de 24m². Un tel débit de filtration Df correspond, sensiblement, au débit des dispositifs de filtration 3 de type classique sachant qu'un tel débit peut aller au moins jusqu'à 500 1/h/m² (correspondant à une membrane dont la perméabilité initiale est de l'ordre de 4000 à 4300 1/h/m²/bar et sous une pression, respectivement, de 0.125 à 0.115 bars) pour des dispositifs (notamment conformes à l'invention) plus performants qui, en cas de colmatage, voient leur débit de filtration chuter aux environs des 70 1/h/m² susmentionnés, voire en dessous.

Aussi et pour réaliser un décolmatage efficace, le procédé consiste en ce que le débit de refoulement Dr du perméat est supérieur au débit de filtration Df du fluide par la membrane 12.

A ce propos, il convient d'observer que ce débit de refoulement Dr du perméat peut, en fait, être de l'ordre de 2 à 80 fois le débit de filtration Df, ceci dans la limite de la perméabilité initiale de la membrane 12.

En fait, ce débit de refoulement Dr peut être au moins égal au double du débit de filtration Df. Un tel débit Dr est, plus particulièrement, adapté dans le cadre de la mise en oeuvre du procédé de décolmatage mené à titre préventif, ceci lorsque la membrane 12 est peu ou pas colmatée par des particules, par exemple en début de filtration et/ou dans le cadre d'un décolmatage régulier et systématique.

A ce propos, on peut considérer qu'une membrane 12 est peu colmatée dans la mesure où le débit de filtration Df est supérieur à 200 1/h/m², ce qui est, usuellement, le cas dans les premières minutes de la filtration.

De même, on peut considérer qu'une membrane 12 n'est pas colmatée dans la mesure où le débit de filtration Df est de l'ordre du débit de filtration initial Dfi.

Cependant et selon un mode particulier de réalisation, ce débit de refoulement Dr peut être de l'ordre de 7 à 30 fois, voire 80 fois, le débit de filtration Df. Un tel débit Dr est, plus particulièrement, adapté dans le cadre d'un procédé de décolmatage mené à titre curatif, lorsque la membrane est moyennement voire fortement colmatée.

A ce propos, on peut considérer qu'une membrane 12 est moyennement colmatée dans la mesure où le débit de filtration Df est supérieur à 100 1/h/m² et inférieur à 200 1/h/m².

Aussi, on considère qu'une membrane 12 est fortement colmatée dans la mesure où le débit de filtration Df est inférieur 100 1/h/m² et très fortement colmatée dans la mesure où ce débit de filtration est inférieur à 50 1/h/m².

A ce propos, on observera que le débit de refoulement Dr est, alors et à l'instar du débit de filtration Df, déterminé en fonction de la surface de filtration de la membrane 12.

En fait, le débit de refoulement Dr du perméat est, d'une part, supérieur à 500 1/h/m² et, d'autre part, inférieur à la perméabilité initiale de la membrane 12 sur eau (qui est, usuellement, de l'ordre de 4000 à 4300 1/h/m²/bar), ceci sous une pression de refoulement déterminée inférieure à 2 bars.

A ce propos, on observera que de bons résultats sont obtenus lorsqu'on refoule un perméat avec un débit de refoulement Dr compris entre 500 et 2000 1/h/m², ce qui correspond, pour une surface de filtration de 24 m², à un débit de refoulement Dr compris entre 3,3 et 13,3 1/s.

Un tel débit de refoulement Dr correspond, plus particulièrement, à un mode de réalisation préféré de l'invention pour lequel le débit de filtration initial Dfi est compris entre 200 et 500 1/h/m², de préférence de l'ordre de 235 1/h/m².

En fait et dans ce cas, de bons résultats sont obtenus lorsque l'on refoule du perméat pendant une durée de refoulement Tr de l'ordre de 0,8s et pour un débit de refoulement Dr de l'ordre de 990 1/h/m², soit 6,6 1/s pour une surface de filtration de 24m².

Dans ces conditions, le volume de perméat à refouler est de l'ordre de 5,33 litres, ceci en 0,8s.

Pour ce faire, un vérin de type pneumatique nécessite, pour l'air comprimé, une pression de 6 bars, un débit de 67 1/min et une vitesse de 35 m/s, ceci dans la conduite du fluide effecteur.

Dans le cas d'un vérin de type hydraulique, le fluide effecteur (usuellement de l'huile) doit avoir une pression de 150 bars, un débit de 2,7 1/min et une vitesse de 1,4 m/s, ceci dans la conduite du fluide effecteur.

Cependant, un mode de réalisation préféré de l'invention consiste à refouler du perméat pendant une durée de refoulement Tr de l'ordre de 0,8s et pour un débit de refoulement Dr de l'ordre de 2000 1/h/m², soit 13.4 1/s pour une surface de filtration de 24m².

Dans ces conditions, le volume de perméat à refouler est de l'ordre de 10,7 litres, ceci en 0,8s.

Pour ce faire et dans le cas d'un vérin de type hydraulique 20, le fluide effecteur (usuellement de l'huile) doit avoir une pression de 100 bars, un débit de 12 1/min et une vitesse de 3 m/s.

Tel qu'évoqué ci-dessus, l'invention consiste à refouler une quantité déterminée de perméat (obtenu par filtration) au travers de la membrane 12 dans des conditions permettant de provoquer, au niveau de cette membrane 12, un choc (similaire à un coup de bélier) apte à provoquer le décollement (désincrustation) des particules de cette membrane 12.

En fait, pour provoquer un tel choc, ce refoulement est assuré avec un débit élevé et sur une courte durée tel qu'évoqué ci-dessus, ceci en sorte de conférer au perméat refoulé une puissance importante ayant pour effet de provoquer un tel choc.

Aussi et pour provoquer un tel choc, ce procédé pour décolmater la membrane 12 consiste, alors, à refouler une quantité déterminée de perméat au travers de la membrane 12 avec une puissance comprise entre 25 et 110 W par m² de surface de membrane 12, de préférence avec une puissance de l'ordre de 83 W/m².

Un tel refoulement est assuré par le biais des moyens de refoulement 14 susmentionnés et en sorte de ne pas occasionner de dégradations à la membrane 12 comme évoqué ci-dessus.

Aussi et pour ce faire, ces moyens de refoulement 14 assurent un refoulement sous une pression inférieure ou égale à 2 bars, ceci au niveau de cette membrane 12.

En fait et selon l'invention, les valeurs de puissance de la gamme susmentionnée (25 à 110 W/m²) sont obtenues pour :
- une pression de refoulement comprise entre 1 et 2 bars, de préférence pour une pression de refoulement de l'ordre de 1,5 bars, ainsi que pour ;
- un débit de refoulement (Dr) compris entre 500 et 2000 1/h/m², de préférence de l'ordre de 2000 1/h/m².

A titre d'exemple, une puissance de 28 W/m² est obtenue pour une pression de refoulement de 2 bars et pour un débit de refoulement (Dr) de 500 1/h/m².

Cette même puissance de 28 W/m² peut, encore, être obtenue pour une pression de refoulement de 1 bar et pour un débit de refoulement (Dr) de l'ordre de 990 à 1000 1/h/m².

Un autre exemple consiste en ce qu'une puissance de 110 W/m² est obtenue pour une pression de refoulement de 2 bars et pour un débit de refoulement (Dr) de 2000 1/h/m².

Finalement, un mode de réalisation préféré de l'invention consiste à assurer un décolmatage sous une puissance de refoulement de 83 W/m² qui peut être obtenue pour une pression de refoulement de 1,5 bars et pour un débit de refoulement (Dr) de 2000 1/h/m².

On observera, également, que les valeurs de puissance de la gamme susmentionnée (25 à 110 W/m²) sont obtenues dans des conditions:
- de durée de refoulement (Tr) du perméat, notamment par rapport à la durée dé transit (Tt);
- de débit de refoulement (Dr) du perméat, notamment par rapport au débit de filtration (Df);
correspondant, en fait, à celles décrites ci-dessus et relatives au procédé conforme à l'invention consistant à refouler le perméat au travers de la membrane (12) avec un débit (Dr) élevé et sur une courte durée (Tr).

Selon une autre caractéristique de l'invention, de procédé consiste, tout d'abord, à fermer la vanne de coupure 22 afin d'arrêter l'écoulement du perméat et en sorte que le dispositif de filtration 3 soit en iso-pression. Le procédé consiste, alors, à arrêter la pompe d'alimentation 5 en vue de diminuer la pression dans le dispositif de filtration 3.

Le procédé consiste, ensuite, à actionner le dispositif de décolmatage 13.

A l'issue du décolmatage, la pompe d'alimentation 5 est, alors, remise en route et la vanne de coupure 22 est réouverte.

La filtration reprend et le vérin 20 est ramené dans sa position inactive ce qui provoque un phénomène de succion dans le cylindre 16 qui se remplit de perméat dans l'attente d'un nouveau décolmatage.

Une caractéristique additionnelle de l'invention consiste en ce qu'un tel procédé de décolmatage est mis en oeuvre périodiquement pendant la filtration du fluide. Un mode préféré de réalisation consiste en ce que ce procédé est mis en oeuvre toutes les 60 à 90 secondes.

## Revendications

1. Procédé pour décolmater la membrane (12) d'un dispositif (3) de filtration tangentielle d'un vin, colmatée par une couche de particules, ce procédé consistant à refouler au travers de la membrane (12) une quantité déterminée de perméat obtenu par la filtration de ce vin, **caractérisé par le fait qu'**il consiste à refouler le perméat au travers de la membrane (12) :
- avec un débit de refoulement (Dr) du perméat, d'une part, supérieur à 500 1/h/m² et, d'autre part, inférieur à la perméabilité initiale de la membrane (12) sur eau ;
- pendant une durée de refoulement (Tr) du perméat comprise entre 0,1 et 1,5s ;
- sous une pression de refoulement comprise entre 1 et 2 bars ;
- ceci de manière à provoquer, au niveau de cette membrane (12), un choc, similaire à un coup de bélier, apte à provoquer le décollement des particules de cette membrane (12).

2. Procédé pour décolmater selon là revendication 1, **caractérisé par le fait que** la durée du refoulement (Tr) du perméat correspond, sensiblement, à la durée de transit (Tt) du vin à l'intérieur de la membrane (12).

3. Procédé pour décolmater selon l'une quelconque des revendications 1 ou 2, **caractérisé par le fait que** la durée de refoulement (Tr) du perméat est au moins égale à la durée de transit (Tt) du vin à l'intérieur de la membrane (12).

4. Procédé pour décolmater selon l'une quelconque des revendications 1 à 3, **caractérisé par le fait que** la durée de refoulement (Tr) du perméat est de l'ordre de 0,8 s.

5. Procédé pour décolmater selon l'une quelconque des revendications précédentes, **caractérisé par le fait que** le débit de refoulement (Dr) du perméat est supérieur au débit de filtration (Df) du vin par la membrane (12), notamment au moins égal au double de ce débit de filtration (Df) dans le cas d'une membrane (12) pas ou peu colmatée.

6. Procédé pour décolmater selon la revendication 5, **caractérisé par le fait que** le débit de refoulement (Dr) du perméat est de l'ordre de 7 à 30 fois le débit de filtration (Df) dans le cas d'une membrane (12) moyennement ou fortement colmatée.

7. Procédé pour décolmater selon l'une quelconque des revendications précédentes, **caractérisé par le fait que** le débit de refoulement (Dr) du perméat est compris entre 500 et 2000 1/h/m², de préférence de l'ordre de 2000 1/h/m².

8. Procédé pour décolmater selon l'une quelconque des revendications précédentes, **caractérisé par le fait que** la pression de refoulement est de l'ordre de 1,5 bars.

9. Procédé pour décolmater selon l'une quelconque des revendications précédentes, **caractérisé par le fait qu'**il consiste à refouler le perméat au travers de la membrane (12) avec une puissance comprise entre 25 et 110 W par m² de surface de membrane (12), de préférence avec une puissance de l'ordre de 83 W/m².

## Claims

1. A method for unclogging the membrane (12) of a device (3) for cross-flow filtering of a wine, clogged by a layer of particles, this method consisting in discharging through the membrane (12) a determined amount of permeate obtained by filtration of the wine, wherein it consists in discharging the permeate through the membrane (12):
- with a flow rate (Dr) of the permeate, on one hand, higher than 500 l/h/m² and, on the other hand, lower than the initial permeability of the membrane (12) on water;
- for a duration of discharge (Tr) of the permeate between 0.1 and 1.5 s;
- at a discharge pressure between 1 and 2 bars;
- this in order to cause, at the level of this membrane (12), an impact similar to a hammer, capable of causing the separation of the particles from this membrane (12);

2. A method for unclogging according to claim 1, wherein the duration of discharge (Tr) of the permeate corresponds substantially to the duration of transit (Tt) of the wine within the membrane (12).

3. A method for unclogging according to any one of claims 1 or 2, wherein the duration of discharge (Tr) of the permeate is at least equal to the duration of transit (Tt) of the wine within the membrane (12).

4. A method for unclogging according to any one of claims 1 to 3, wherein the duration of discharge (Tr) of the permeate is about 0.8 s.

5. A method for unclogging according to any one of the preceding claims, wherein the flow rate (Dr) of the permeate is higher than the filtration rate (Df) of the wine by the membrane (12), in particular at least equal to twice this filtration rate (Df) in the case of a not at all or little clogged membrane (12).

6. A method for unclogging according to claim 5, wherein the flow rate (Dr) of the permeate is about 7 to 30 times the filtration rate (Df) in the case of a moderately or highly clogged membrane (12).

7. A method for unclogging according to any one of the preceding claims, wherein the flow rate (Dr) of the permeate is between 500 to 2,000 1/h/m², preferably about 2,000 1/h/m².

8. A method for unclogging according to any one of the preceding claims, wherein the pressure is about 1.5 bars.

9. A method for unclogging according to any one of the preceding claims, wherein it consist in discharging the permeate through the membrane (12) with a power between 25 and 110 W per m² of surface area of the membrane (12), preferably with a power of about 83 W/m².

## Patentansprüche

1. Verfahren, um die durch eine Partikelablagerungsschicht verstopfte Membran (12) einer Vorrichtung (3) für die Querstromfiltration von Wein zu reinigen, wobei dieses Verfahren darin besteht, durch die Membran (12) eine bestimmte Menge von dem durch die Filtration dieses Weins gewonnenen Permeat rückzuspülen, **dadurch gekennzeichnet, dass** es darin besteht, das Permeat durch die Membran (12)
- mit einer Rückspülströmungsrate (Dr) des Permeats, die, einerseits, grösser als 500 1/h/m², und, andererseits, kleiner als die anfängliche Permeabilität der Membran (12) für Wasser ist;
- während einer Dauer der Rückspülung (Tr) mit Permeat, die zwischen 0,1 und 1,5s liegt;
- bei einem Rückspüldruck, der zwischen 1 und 2 bar liegt;
- und zwar derart rückzuspülen, um im Bereich dieser Membran (12) eine schlagartige Druckschwankung ähnlich wie einen Druckstoß zu verursachen, geeignet, um die Partikelablösung von dieser Membran (12) zu verursachen.

2. Verfahren zur Reinigung nach Anspruch 1, **dadurch gekennzeichnet, dass** die Dauer der Rückspülung (Tr) mit Permeat im Wesentlichen der Dauer des Durchlaufs (Tt) des Weins durch die Membran (12) entspricht.

3. Verfahren zur Reinigung nach irgendeinem der Ansprüche 1 oder 2, **dadurch gekennzeichnet, dass** die Dauer der Rückspülung (Tr) mit Permeat zumindest gleich groß wie die Dauer des Durchlaufs (Tt) des Weins durch die Membran (12) ist.

4. Verfahren zur Reinigung nach irgendeinem der Ansprüche 1 bis 3, **dadurch gekennzeichnet, dass** die Dauer der Rückspülung (Tr) mit Permeat bei etwa 0,8 s liegt.

5. Verfahren zur Reinigung nach irgendeinem der vorgehenden Ansprüche, **dadurch gekennzeichnet, dass** die Rückspülströmungsrate (Dr) des Permeats größer als die Filtrationsströmungsrate (Df) des Weins durch die Membran (12), insbesondere zumindest doppelt so groß wie diese Filtrationsströmungsrate (Df) im Falle einer nicht oder wenig verstopften Membran (12) ist.

6. Verfahren zur Reinigung nach Anspruch 5, **dadurch gekennzeichnet, dass** die Rückspülströmungsrate (Dr) des Permeats zwischen 7 bis 30 Mal größer als die Filtrationsströmungsrate (Df) im Falle einer mittelmäßig oder stark verstopften Membran (12) ist.

7. Verfahren zur Reinigung nach irgendeinem der vorgehenden Ansprüche, **dadurch gekennzeichnet, dass** die Rückspülströmungsrate (Dr) des Permeats zwischen 500 und 2000 1/h/m², vorzugsweise bei etwa 20001/h/m² liegt.

8. Verfahren zur Reinigung nach irgendeinem der vorgehenden Ansprüche, **dadurch gekennzeichnet, dass** der Rückspüldruck ca. 1,5 Bar ist.

9. Verfahren zur Reinigung nach irgendeinem der vorgehenden Ansprüche, **dadurch gekennzeichnet, dass** es darin besteht, das Permeat durch die Membran (12) mit einer Leistung, die zwischen 25 und 110 W pro m² Membranoberfläche (12) liegt, vorzugsweise mit einer Leistung von ca. 83 W/m² rückzuspülen.
